# EUROPÄISCHE PATENTSCHRIFT

(11) **EP 1 497 100 B1**
(45) Veröffentlichungstag und Bekanntmachung des Hinweises auf die Patenterteilung: **27.07.2011**
(21) Anmeldenummer: 03725052.9
(22) Anmeldetag: 17.04.2003
(51) Int. Cl.: B29C 51/04, B29C 51/38, B29C 51/46, B29C 51/26

(54) **THERMOFORMANLAGE ZUR HERSTELLUNG VON FORMKÖRPERN AUS KUNSTSTOFFFOLIE, SOWIE VERFAHREN ZU DEREN HERSTELLUNG**
THERMOFORMING INSTALLATION AND METHOD FOR PRODUCING MOULDED BODIES CONSISTING OF PLASTIC FILM
INSTALLATION DE THERMOFORMAGE ET PROCEDE POUR PRODUIRE DES CORPS MOULES EN FILM DE MATIERE PLASTIQUE

(30) Priorität: 25.04.2002 DE 20206601 U; 25.04.2002 DE 10218486; 25.04.2002 DE 20206600 U; 25.04.2002 DE 10218511
(43) Veröffentlichungstag der Anmeldung: 19.01.2005
(60) Teilanmeldung: 09006715.8
(73) Patentinhaber: KUHNE ANLAGENBAU GmbH, D-53757 Sankt Augustin (DE)
(72) Erfinder: SCHLÖSSER, Helmut, 53343 Wachtberg (DE); ASSELBORN, Peter, 51465 Bergisch Gladbach (DE)
(74) Vertreter: Kuhnen & Wacker
(86) Internationale Anmeldenummer: PCT/EP2003/004028
(87) Internationale Veröffentlichungsnummer: WO 2003/091001

(56) Entgegenhaltungen:
- EP-A- 0 884 161
- EP-A- 1 046 489
- EP-A- 1 142 691
- DE-C- 19 948 768
- US-A- 4 565 513

## Beschreibung

Die vorliegende Erfindung betrifft eine Thermoformanlage zur Herstellung von Formkörpern aus Kunststoffolie, wie Becher, Behälter, Deckel, Lebensmittelverpackungen oder dgl., mit einer ein zweiteiliges Formwerkzeug aufweisenden Umformstation, nach dem Oberbegriff des Anspruchs 1, sowie ein Verfahren zur Herstellung solcher Formkörper nach dem Oberbegriff des Anspruchs 6.

Thermoformanlagen sind in unterschiedlichen Varianten und Ausführungsformen in der Praxis bekannt geworden. Dabei wird zur Herstellung behälterförmiger Artikel bzw. Formkörper aus thermoplastischem Kunststoff ein zweiteiliges Formwerkzeug verwendet. Eine Formhälfte, das sogenannte obere Werkzeug, ist am oberen Werkzeugtisch befestigt und mit diesem in der Regel einstellbar feststellbar mit dem Rahmen bzw. Gestell der Thermoformanlage verbunden, so daß das obere Werkzeug auf den jeweils herzustellenden Formkörper eingestellt werden kann. Die andere Formhälfte, das sogenannte untere Werkzeug, ist beweglich im Rahmen bzw. Gestell der Thermoformanlage geführt.

Zum Ausformen der Formkörper befinden sich die Formhälften, also das obere und das untere Werkzeug, in einer einander zugewandten geschlossenen Position. Zwischen dem oberen und dem unteren Werkzeug ist eine häufig vorgewärmte und somit gut plastisch verformbare Kunststoffolie angeordnet, welche meistens in Form einer Folienbahn von einer Vorratsrolle taktweise zugeführt wird.

Beim Tiefziehvorgang wird die Kunststoffolie zwischen dem oberen und dem unteren Werkzeug eingeklemmt und damit in dessen Lage fixiert. Dann wird die Kunststoffolie durch die Vorstrecker des oberen Werkzeugs in die Kavitäten des unteren Werkzeugs gedrückt, während der Rand des zu erzeugenden Formkörpers weiterhin zwischen dem oberen und dem unteren Werkzeug klemmend festgehalten ist. Durch Erzeugung eines Unterdrucks in den Kavitäten oder durch Einblasen von Luft legt sich die Folie an die Innenwandungen der Kavitäten im unteren Werkzeug an und nimmt somit die gewünschte Form an.

Nach hinreichender Abkühlung der Kunststoffolie durch den Kontakt mit der ggf. aktiv gekühlten Werkzeugoberfläche erfolgt das Heraustrennen der Formkörper aus der Kunststoffolie. Hierzu wird das untere Werkzeug etwa um den Betrag der Foliendicke aufwärts bewegt. Entsprechende Schneidkanten des zweiteiligen Formwerkzeugs schneiden dabei die einzelnen Formkörper aus der Folienbahn heraus. Das zurückbleibende Foliengitter wird häufig wiederum taktweise einer Aufwickeleinheit zugeführt.

Zur Entnahme der Formkörper aus den Kavitäten wird das untere Werkzeug anschließend vom oberen Werkzeug weg bewegt und dabei derart um dessen Längsachse verschwenkt, daß das untere Werkzeug zu einer Stapeleinrichtung zeigt und damit die Formkörper der Stapeleinrichtung übergeben werden können.

Beispiele für vorstehend diskutierte, aus der Praxis bekannte Thermoformanlagen sind z.B. in der US 6,135,756 oder der DE 33 46 628 A1 beschrieben.

Diese bekannten Thermoformanlagen weisen jedoch den wesentlichen wirtschaftlichen Nachteil auf, daß damit lediglich geringe Taktfrequenzen beispielsweise bis etwa 30 Takte pro Minute realisierbar sind. Höhere Taktfrequenzen sind ohne Beschädigung der bewegten Bauteile nicht möglich. Diese geringen Taktfrequenzen sind jedoch angesichts des heute vorherrschenden hohen Kostendrucks nicht mehr akzeptabel.

Weiterhin von Nachteil sind die bei den bekannten Thermoformanlagen eingesetzten Antriebe für die im oberen Werkzeug beweglich angeordneten Vorstrecker, da mit diesen ebenfalls lediglich geringe Taktfrequenzen beispielsweise bis etwa 30 Takte pro Minute realisierbar sind. Ferner ist bei den bekannten Thermoformanlagen die mangelnde Genauigkeit bei der Einstellbarkeit bzw. Anpassbarkeit des oberen Werkzeugs in Bezug auf die herzustellenden Formkörper von Nachteil.

Die in der DE 33 46 628 A1 beschriebene Thermoformanlage arbeitet im Detail mit einem zweiteiligen Formwerkzeug, wobei das obere Werkzeug gestellfest und das untere Werkzeug beweglich ausgeführt ist. Das untere Werkzeug wird zum Schließen bzw. zum Öffnen in einer kombinierten Hub- und Schwenkbewegung zum oberen Werkzeug hin und von diesem weg und zugleich zu einer Stapeleinrichtung hin ausgerichtet und von dieser weg zum oberen Werkzeug zurück orientiert. Die Hub- und Schwenkbewegung des unteren Werkzeugs wird durch ein Kurvenscheiben-Kniehebelgelenksgetriebe erzeugt. Das untere Werkzeug soll damit vertikal verschoben und gleichzeitig um seine eigene Längsachse verschwenkt werden.

Die bei der aus der DE 33 46 628 A1 bekannten Thermoformanlage zum Einsatz kommende Kombination aus Kniehebelgelenksmechanik in Verbindung mit einem Kurvenscheibenantrieb ist sehr komplex gestaltet. Dabei weist bereits der Kurvenscheibenantrieb als solcher den systematischen Nachteil auf, daß damit nur begrenzte Kräfte übertragbar sind. Zudem sind mit einem Kurvenscheibenantrieb keine hohen Taktfrequenzen realisierbar. Daneben neigen Kurvenscheibenantriebe schnell zum Verschleiß, so daß diese häufig gewartet werden müssen, was die Betriebskosten einer solchen Thermoformanlage inakzeptabel in die Höhe treibt. Zudem weist die hier diskutierte Thermoformanlage gemäß der DE 33 46 628 A1 mit deren komplexer Kniehebelgelenksmechanik eine weitere Bauteilgruppe auf, die ebenfalls systembedingt nur geringe Taktfrequenzen zuläßt.

Nähere Informationen zur Ausgestaltung des Antriebs der Vorstrecker sind der DE 33 46 628 A1 nicht zu entnehmen. Demzufolge ist davon auszugehen, daß der dort nicht weiter diskutierte Vorstreckerantrieb keine höheren Taktfrequenzen zuläßt, als der Antrieb für das untere Werkzeug, dessen Taktfrequenz bereits vorstehend als zu gering festgestellt wurde.

Die Thermoformanlage gemäß der US 6,135,756 weist im Detail ebenfalls ein zweiteiliges Formwerkzeug auf. Die Führungseinrichtung ist auch hier mit der Antriebseinrichtung des unteren Werkzeugtisches bzw. des unteren Werkzeugs kombiniert und erzeugt vermittels eines Kurvenscheiben-Kurbelgetriebes eine kombinierte Hub- und Schwenkbewegung des Unterwerkzeugs, wobei zwei jeweils an den äußeren Stirnseiten des unteren Werkzeuges angeordnete Kurvenscheiben-Kurbelgetriebe vorhanden sind. Dabei weist das untere Werkzeug an seinen äußeren Seiten je drei Zapfen auf, die in den gestellfesten zugeordneten Nutkurven laufen. Diese Nutkurven weisen eine extrem komplexe Geometrie auf und sind so ausgelegt, daß das untere Werkzeug beim Öffnen des Formwerkzeugs vom oberen Werkzeug abwärts weg bewegt und verschwenkt werden kann, um es auf eine Stapeleinrichtung hin zu orientieren und von dieser wieder weg schwenken zu können. Da die komplexe Geometrie der Nutkurven nicht geeignet ist, um die für das Heraustrennen der geformten Formkörper aus der Kunststoffolie notwendigen Kräfte zu übertragen, sind zusätzliche Kurvenscheiben vorgesehen, mit denen die hierzu notwendigen Kräfte übertragen werden sollen. Der damit erzielbare Austrennvorgang bleibt dennoch ein Schneiden bzw. Abquetschen. Von einem Stanzen kann nicht gesprochen werden.

Abgesehen davon sind mit den geometrisch komplexen und nur sehr schwer aufeinander abstimmbaren Nutkurvenführungen die heute geforderten hohen Taktfrequenzen ausgeschlossen.

Der Antrieb der Vorstrecker ist bei der US 6,135,756 als Kombination aus Zahnstange und Zahnrad beschrieben. Damit sind die für einen wirtschaftlichen Betrieb einer modernen Thermoformanlage geforderten hohen Taktfrequenzen nicht realisierbar. Denn zur Erzielung einer dauerhaft wiederholbaren hohen Taktfrequenz bedarf es nicht nur hoher Taktfrequenzen beim Schließens und Öffnens des Formwerkzeugs, sondern auch die Hubbewegung der Vorstrecker muß parallel dazu wenigstens in gleichem Maße gesteigert werden, damit die Vorstrecker im selben Takt betrieben werden können, wie das Formwerkzeug.

Daneben sind aus der Praxis Vorstreckerantriebe bekannt geworden, bei denen die Vorstrecker vermittels Kugelrollenspindeln angetrieben werden. Mit derartigen Kugelrollenspindeln sind die geforderten hohen Taktfrequenzen nicht zu erreichen. Darüber hinaus sind Kugelrollenspindeln zu teuer, wartungsanfällig und weisen als weiteren Nachteil hohe Ausfallzeiten auf.

Eine weitere Antriebseinrichtung für einen Streckhelfer zum mechanischen Verformen einer erwärmten Kunststofffolie oder -platte ist in der EP 1 046 489 A2 offenbart.

Die US 4,565,513 A offenbart weiter eine Thermoformanlage, bei welcher der untere Tisch mittels eines Kniehebelantriebs zum Öffnen und Schließen, sowie zum Auswerfen der Formkörper, angetrieben wird.

Die DE 199 48 768 Cl offenbart schließlich eine Thermoformanlage zur Herstellung von Formkörpern aus Kunststoffolie gemäß dem Oberbegriffen der unabnänigen Ansprüche 1 und 6. Die dort beschriebene Vorrichtung zum Formen und Ausstanzen von Behältern aus einer themorplastischen Kunststoffolie weist ein zweiteiliges Formwerkzeug mit einem oberen und einem unteren Werkzeugtisch auf.

Ausgehend vom vorgenannten Stand der Technik ist es Aufgabe der vorliegenden Erfindung, bekannte Thermoformanlagen derart zu verbessern, daß wesentlich höhere Taktfrequenzen erreicht werden können und damit ein wirtschaftlicher Betrieb solchermaßen verbesserter Thermoformanlagen möglich wird. Ferner ist es Aufgabe der vorliegenden Erfindung, ein wirtschaftliches Verfahren zur Herstellung von Formkörpern aus Kunststoffolie vorzuschlagen.

Diese Aufgabe wird in vorrichtungstechnischer Hinsicht durch die Merkmale des Anspruchs 1 gelöst.

In verfahrenstechnischer Hinsicht wird die Aufgabe gelöst durch die Merkmale des Anspruchs 6.

Erfindungsgemäß wird eine Thermoformanlage zur Herstellung von Formkörpern aus Kunststofffolie, wie Becher, Behälter, Deckel, Lebensmittelverpackungen oder dgl., mit einer ein zweiteiliges Formwerkzeug aufweisenden Umformstation, vorgeschlagen. Dabei weist das zweiteilige Formwerkzeug einen einstellbar feststellbar oberen Werkzeugtisch mit einem oberen Werkzeug mit darin beweglich gelagerten Vorstreckern und einen beweglichen unteren Werkzeugtisch mit einem unteren Werkzeug mit Kavitäten auf. Der bewegliche untere Werkzeugtisch ist dabei vermittels einer Führungseinrichtung geführt und durch eine Antriebseinrichtung relativ zum oberen Werkzeugtisch auf diesen zu und von diesem weg bewegbar.

Hierbei ist erstmalig vorgesehen, daß der obere Werkzeugtisch eine erste ihm zugeordnete Antriebseinrichtung zum Einrichten des oberen Werkzeugtisches in seiner Lage relativ zum oberen Totpunkt des unteren Werkzeugtisches in Abstimmung mit dem jeweils herzustellenden Formkörper aufweist, und daß der obere Werkzeugtisch eine zweite ihm zugeordnete Antriebseinrichtung zum Antreiben der im oberen Werkzeug beweglich gelagerten Vorstrecker aufweist, wobei die zweite Antriebseinrichtung über eine Schub-Zugstange, einen Kipphebel und eine Druckstange auf den Vorstrecker im oberen Werkzeug, vorzugsweise vermittels eines verschieblich ausgestalteten Drehpunktes des Kipphebels einwirkt.

Gegenüber den aus dem Stand der Technik bekannten Vorstreckerantrieben bietet die erfindungsgemäße Entkoppelung des Antriebs der Vorstrecker durch eine entsprechende Bereitstellung eines hierfür separaten Antriebs als auch eines weiteren separaten Antriebs zum Justieren bzw. Einstellen des oberen Werkzeugs in Bezug auf die herzustellenden Formkörper vor dessen abschließender Feststellung vor dem Starten des jeweiligen Produktionsprozesses, den Vorteil, daß diese beiden Antriebe unabhängig voneinander optimiert werden können. Dementsprechend kann ein für das einmalige Justieren bzw. Einstellen des oberen Werkzeuges vor Beginn des jeweiligen Produktionsprozesses bestgeeigneter Antrieb vorgesehen werden, der dann in vorteilhafter Weise nicht zwingend zugleich auch noch die geforderten hohen Taktfrequenzen beim Antreiben des Vorstreckers realisieren muß, sondern speziell bezüglich Genauigkeit und Wiederholbarkeit einer exakten Justierung des oberen Werkzeugtisches ausgewählt werden kann. Dementsprechend kann der separate Vorstreckerantrieb in Bezug auf die geforderte hohe Taktfrequenz ausgewählt und diesbezüglich optimiert werden.

Eine derartige separate Optimierung der getrennten Antriebe erhöht zwar augenscheinlich die Anzahl der Bauteile, bietet demgegenüber jedoch den unschätzbaren Vorteil, daß beide Antriebe für sich konstruktiv möglichst einfach gehalten und damit schlußendlich wieder kostengünstig ausgebildet werden können.

Dadurch, dass die zweite Antriebseinrichtung über die Schubstange, den Kipphebel und die Druckstange auf den Vorstrecker im oberen Werkzeug einwirkt, wird eine besonders einfache konstruktive Lösung erzielt. Dabei ist in besonders bevorzugter Weise vorgesehen, daß der Kipphebel einen verschieblich ausgestalteten Drehpunkt aufweist, so daß dessen Hebelarme und damit einhergehend dessen Kraftverhältnisse auf den jeweiligen Anwendungsfall abgestimmt werden können. Die Betätigung der Vorstrecker über eine Schubstange, einen Kipphebel und eine Druckstange ermöglicht die Anordnung des zweiten Antriebs außerhalb des Bereiches des oberen Werkzeuges insbesondere in vorteilhafter Weise nicht direkt über diesem, so daß bei Einsatz eines hydraulischen Antriebes ein nicht immer gänzlich auszuschließendes geringfügiges Austreten von Hydrauliköl nicht weiter von Bedeutung ist, da dieses in vorteilhafter Weise nicht auf die Folienbahn hinunter tropfen kann. Zudem kann in weiter vorteilhafter Weise der zweite Antrieb für die Vorstrecker bei Übertragung dessen Antriebskräfte über eine Schubstange, einen Kipphebel und eine Druckstange auf die Vorstrecker derart seitlich vom oberen Werkzeugtisch angeordnet werden, daß sich der zweite Antrieb mit dem oberen Werkzeugtisch mit diesem mit und somit relativ zu diesem nicht bewegt, so daß der zweite Antrieb ausschließlich die Bewegung der Vorstrecker steuert und somit besonders vorteilhaft in Bezug auf hohe Taktfrequenzen optimiert werden kann.

Weiter von Vorteil ist, daß die Verschiebung des Drehpunktes zur Einstellung eines variablen Vorstreckerhubes nutzbar ist. Die Drehpunktverschiebung ergibt in vorteilhafter Weise einen konstanten Hub des Antriebes und eine stufenlose Anpassung des Vorstreckerhubes, so daß der obere Totpunkt des Vorstreckers konstant bleibt und der untere Totpunkt je nach Produkt- bzw. Formkörperhöhe angepaßt werden kann.

Weitere vorteilhafte Ausführungsformen und Aspekte der vorliegenden Erfindung sind Gegenstand der Unteransprüche.

In einer bevorzugten Ausführungsform der erfindungsgemäßen Thermoformanlage ist die erste Antriebseinrichtung zum Einrichten des oberen Werkzeugtisches als elektrischer Servomotor ausgebildet. Dieser bietet den Vorteil einer exakten Regelbarkeit, wobei dessen Geschwindigkeitsprofil frei wählbar ist. Damit können sowohl schnelle Zustellbewegungen zur Überwindung großer Einstellwege als auch besonders langsame und genaue Zustellbewegungen für eine exaktes Einrichten des oberen Werkzeugtisches im Millimeter- oder gar Zehntelmillimeterbereich je nach gewünschter Genauigkeit erreicht werden. Zudem stehen elektrische Servomotoren in jeder geforderten Auslegungsvariante kostengünstig am Markt zur Verfügung.

Gemäß einer weiter bevorzugten Ausführungsform der erfindungsgemäßen Thermoformanlage ist vorgesehen, daß diese erste Antriebseinrichtung über eine Synchronisationswelle mit darauf beispielsweise angeordneten Schnecken/Rädern über zwei zugeordnete Stellspindeln zusammenwirkt, die ihrerseits derart auf den oberen Werkzeugtisch einwirken, daß dieser in seiner horizontalen Ausrichtung vertikal auf und ab bewegbar ist, so daß der obere Werkzeugtisch auf den jeweils herzustellenden Formkörper einstellbar ist. Damit kann in vorteilhafter Weise der vorstehend diskutierte Vorteil eines frei wählbaren Geschwindigkeitsprofils eines vorteilhaften Servomotors in synergetischer Weise optimal sowohl in große Zustellbewegungen als auch in kleine bzw. feine Justierbewegungen übersetzt werden.

Bei einer weiter bevorzugten Ausführungsform der erfindungsgemäßen Thermoformanlage weist die zweite Antriebseinrichtung des oberen Werkzeugtisches zum Antreiben der Vorstrecker einen hydraulischen Antrieb oder einen vermittels eines elektrischen Servomotors angetriebenen Kurbelantrieb auf. In beiden Fällen sind besonders hohe Taktfrequenzen erzielbar. Diese hohen Taktfrequenzen können wenigstens 40 Takt, 50 Takte oder mehr Takte betragen. So können darüber hinaus bei einem hydraulischen Antrieb der Vorstrecker in vorteilhafter Weise Vorstreckerkräfte von wenigstens 40 kN bei einem Arbeitshub von wenigstens 120 mm und einer bewegten Masse von wenigstens 200 kg realisiert werden, wobei die Zeit für das Überstreichen des Arbeitshubes von 120 mm weniger als 200 ms beträgt.

Bei einer weiter bevorzugten Ausführungsform der erfindungsgemäßen Thermoformanlage ist der Vorstrecker vermittels der zweiten Antriebsvorrichtung derart antreibbar, daß ein Hub von wenigstens 120 mm oder mehr in weniger als 300 ms, vorzugsweise weniger als 200 ms, ausführbar ist. Damit werden vorteilhafter Weise Taktfrequenzen über 60 Takte pro Minute realisierbar, so daß bei einer erfindungsgemäßen Thermoformanlage, die beispielsweise einen Kurbelantrieb für einen linear geführten unteren Werkzeugtisch vorsieht, insgesamt bislang nicht als realisierbar geglaubte hohe Taktfrequenzen erreicht werden können.

Die vorstehende Aufgabe wird in verfahrenstechnischer Hinsicht durch die Merkmale des Anspruchs 6 gelöst. Dabei wird erstmals ein Verfahren zur Herstellung von Formkörpern aus Kunststoffolie, wie Becher, Behälter, Deckel, Lebensmittelumverpackungen oder dergleichen, mit einer Thermoformanlage gemäß dem Oberbegriff des Anspruchs 1 vorgeschlagen, das folgende Schritte aufweist: a) Zuführen von Kunststofffolie in das zweiteilige Formwerkzeug vermittels eines Kettentransports, b) Spannen der Kunststofffolie im Bereich des Fromwerkzeugs, c) Schließen des Formwerkzeuges durch Führung des beweglichen unteren Werkzeugtisches vermittels der Führungseinrichtung sowie Antreiben desselben vermittels der Antriebseinrichtung derart, daß dieser relativ zum oberen Werkzeugtisch auf diesen zubewegt wird, d) Herstellen der Formkörper bei geschlossenem Formwerkzeug, e) Öffnen des Formwerkzeuges durch Führung des beweglichen unteren Werkzeugtisches vermittels der Führungseinrichtung sowie Antreiben desselben vermittels der Antriebseinrichtung derart, daß dieser relativ zum oberen Werkzeugtisch von diesem wegbewegt wird, und f) Auswerfen der Formkörper ggf. in eine Stapeleinrichtung, wobei erstmals vorgesehen ist, daß der obere Werkzeugtisch vermittels einer ersten, ihm zugeordneten Antriebseinrichtung in seiner Lage relativ zum oberen Totpunkt des unteren Werkzeugtisches in Abstimmung mit dem jeweils herzustellenden Formkörper eingerichtet wird, und daß die im oberen Werkzeug beweglich gelagerten Vorstrecker vermittels einer zweiten Antriebseinrichtung angetrieben werden können, wobei die Antriebseinrichtung über eine Schub-Zugstange, einen Kipphebel und eine Druckstange auf den Vorstrecker im oberen Werkzeug vorzugsweise vermittels eines verschieblich ausgestalteten Drehpunktes des Kipphebels einwirkt.

Die damit verbundenen Vorteile sind bereits vorstehend im Bezug auf die Vorrichtung diskutiert worden.

Weitere vorteilhafte Ausführungen des Verfahrens sind in den Unteransprüchen diskutiert.

Die Erfindung wird nachfolgend in Ausführungsbeispielen anhand der Figuren der Zeichnung näher erläutert. Es zeigt:
- Fig. 1: eine Draufsicht auf eine Ausführungsform einer erfindungsgemäßen Thermoformanlag
- Fig. 2: eine Seitenansicht der in Fig. 1 dargestellten beispielhaften Ausführungsform einer erfindungsgemäßen Thermoformanlage;
- Fig. 3: eine von der Seite gezeigte Detailansicht des Antriebs zum Verschwenken der Führungs-Schienenanordnung der in Fig. 1 und 2 gezeigten Variante einer erfindungsgemäßen Thermoformanlage;
- Fig. 4: einen Schnitt längs der Linie X-X aus Fig. 3;
- Fig. 5: die in Fig. 1 bis 4 gezeigte Variante in einer schräggestellten Betriebsanordnung;
- Fig. 6: eine schematisch vereinfachte Skizze einer beispielhaften Ausführungsform eines erfindungsgemäßen Antriebs zur Betätigung der Vorstrecker in der erfindungsgemäßen Thermoformanlage gemäß Fig. 1 bis 5;
- Fig. 7: eine schematisch vereinfachte Skizze einer beispielhaften Ausführungsform, die verdeutlicht, wie der in Fig. 6 gezeigte Antrieb ausgebildet sein kann;
- Fig.8: eine alternative Ausführungsform des erfindungsgemäßen Vorstreckerantriebs der Thermoformanlage gemäße Fig. 1 bis 5;
- Fig. 9: eine weitere Variante der in Fig.6 bis 8 gezeigten Alternativen erfindungsgemäßer Vorstreckerantriebe, mit den Vorstreckern in der Parkposition;
- Fig.10: die in Fig. 9 gezeigte Ausführungsform eines Vorstreckerantriebes, mit den Vorstreckern in ausgefahrenem Zustand; und
- Fig. 11: eine weitere alternative Getriebestruktur zu den in Fig. 6 bis 10 gezeigten Varianten von Vorstreckerantrieben.

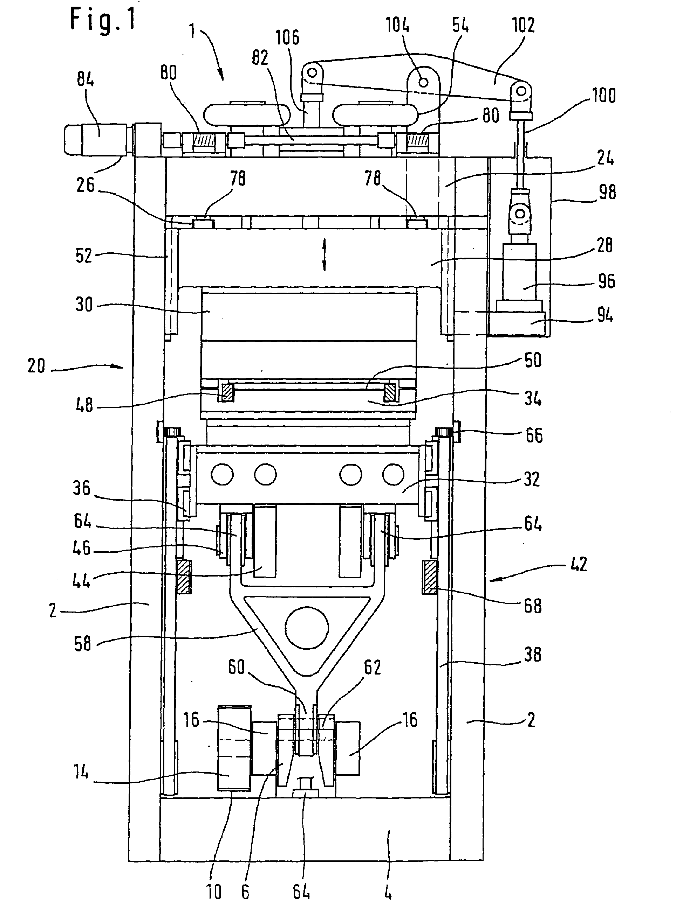

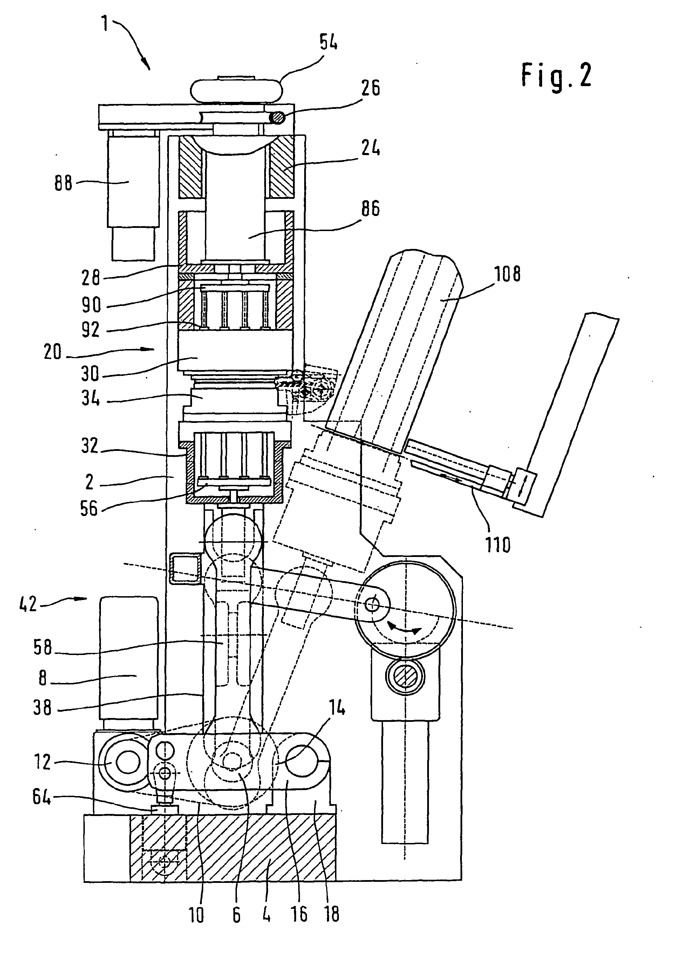

In Fig. 1 ist eine beispielhafte Ausführungsform einer erfindungsgemäßen Thermoformanlage 1 in einer Ansicht von vorne dargestellt. Die beweglichen Baugruppen der Thermoformanlage 1 sind in einem Gestell 2 angeordnet. Das Gestell 2 kann beispielsweise in Vorm von Gestellplatten aus Stahlblech, die spannungsfrei geglüht sind, aufgebaut sein. Eine unten, d.h. zum Boden hin angeordnete Traverse 4 verbindet die Gestellplatten 2 und dient zugleich als Bett für die Lager des Kurbelwellenantriebs 6. Der Kurbelwellenantrieb 6 wird in der hier dargestellten Variante über einen elektrischen Servomotor 8 angetrieben. Dessen Antriebskraft wird über einen Riemen 10 und Riemenscheiben 12 und 14 angetrieben, was insbesondere in Fig. 2 in der seitlichen Ansicht besser erkennbar ist. Der Kurbelwellenantrieb 6 ist bei der hier dargestellten Variante in relativ kurzen Hebelarmen 16 beidseits symmetrisch gelagert, wobei die Hebelarme 16 ihrerseits an einen auf der Traverse 4 befestigten Lagerbock 18 angelenkt sind.

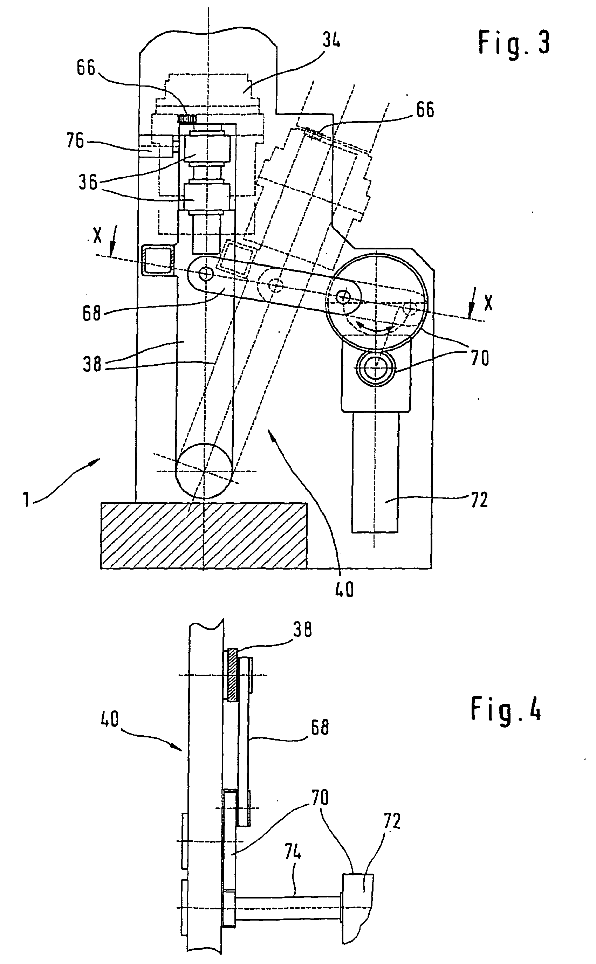

In Fig. 1 als auch in Fig. 2 ist etwa in der Bildmitte das zweiteilige Formwerkzeug 20 der Umformstation der Thermoformanlage 1 in geschlossenem Zustand dargestellt. Eine im oberen Bildabschnitt von Fig. 1 und Fig. 2 erkennbare Traverse 24 verbindet die beiden Gestellplatten 2 oberhalb des zweiteiligen Formwerkzeugs 20 und dient als Basis für einen Antrieb 26 zum Justieren des oberen Werkzeugtisches 28 mit dem daran befestigten oberen Werkzeug 30. Der Antrieb 26 zum Justieren des oberen Werkzeugtisches 28 kann beispielsweise als Feinhub mit Gewinde-Spielausgleich ausgebildet sein. Ein unterer Werkzeugtisch 32 trägt das untere Werkzeug 34 und ist vermittels entsprechend ausgebildeter Linearführungen 36 zwischen den schwenkbaren Führungsschienen 38 der verschwenkbaren Führungsschienenanordnung 40 (vgl. Fig. 3 und 4) der Führungseinrichtung 42 angeordnet. An der Unterseite bzw. am Boden des unteren Werkzeugtisches 32 sind Auswerferzylinder 44 und die oberen Pleuelstangenlager 46 befestigt.

Zwischen dem oberen Werkzeug 30 und dem unteren Werkzeug 34 des in Fig. 1 und 2 geschlossen dargestellten Formwerkzeuges 20 ist ein Kettentransport 48 gezeigt, vermittels dem die Kunststoffolie 50 dem zweiteiligen Formwerkzeug 20 zugeführt und nach dem Ausformen und Ausstanzen der hier nicht mehr dargestellten Formkörper wegtransportiert wird, wobei die Kunststoffolie 50 mit entsprechend geeigneten Mitteln im Bereich des zweiteiligen Formwerkzeuges 20 vorzugsweise bidirektional planar gespannt wird.

Der obere Werkzeugtisch 28 ist in entsprechend ausgestalteten Linearführungen 52 zwischen den Gestellplatten 2 geführt. Das untere Werkzeug 34 kann beispielsweise eine Anschraubfläche von 490 mm x 1040 mm haben. Damit sind beispielsweise vier Reihen à acht Kavitäten für 32 Formkörper bei einem Formkörperdurchmesser von etwa 75 mm realisierbar. Dies bedeutet eine gesamte Stanzlänge aller durchzustanzenden Kanten von 7640 mm, was eine Gesamtstanzkraft von etwa 400 kN notwendig macht.

Das obere Werkzeug 30 ist beispielsweise über nicht näher dargestellte Distanzstücke am oberen Werkzeugtisch 28 befestigt. Nicht näher dargestellte Führungsschienen erleichtern die Montage der Werkzeuge. Ein Gewindespielausgleich 54 dient zum Ausgleich von Spiel beispielsweise beim Feinhubantrieb 26 des oberen Werkzeugtisches 28. Die Linearführungen 36 für den unteren Werkzeugtisch 32 weisen eine spielfreie Einstellung auf und gewährleisten eine exakte Führung des unteren Werkzeuges 34. Die Linearführungen 52 des oberen Werkzeugtisches 28 weisen nicht näher dargestellte spielfrei einstellbare Gleitführungen auf.

Die unterhalb des unteren Werkzeugtisches 32 angeordneten Auswerferantriebe 44 für die in Fig. 2 in einem dortigen Teilschnitt erkennbaren Auswerfer 56 weisen zwei pneumatische Zylinder mit einer Hubbegrenzung auf.

Die vom Kurbelwellenantrieb 6 angetriebene Pleuelstange 58, die auch als Kurbelstange für den Hubantrieb des unteren Werkzeugtisches 32 bezeichnet werden kann, ist in der hier dargestellten Variante in Form eines Dreiecks bzw. Y-förmig ausgebildet. Die Pleuelstange 58 ist mit einem ersten Pleuelstangenabschnitt 60 am Exzenterwellenabschnitt 62 des Kurbelwellenantriebs 6 angelenkt. Die beiden in Fig. 1 und 2 nach oben weisenden Arme 64 der Y-förmigen Pleuelstange 58 sind an den Pleuelstangenlagern 46 des unteren Werkzeugtisches 32 angelenkt. Diese beiden oberen Pleuelstangenlager 46 sind hier möglichst derart angeordnet, daß eine Durchbiegung des unteren Werkzeugtisches 32 als auch dessen Eigengewicht möglichst gering gehalten werden können. Die Y-förmig ausgebildete Pleuelstange 58 hat am unteren Pleuelstangenabschnitt 60 der hier dargestellten Variante in vorteilhafter Weise nur ein Lager, so daß bereits ein Kurbeltrieb genügt.

Wie bereits vorstehend ausgeführt ist der Kurbelwellenantrieb 6 mit einer zweifachen Lagerung in biegesteifer Ausführung vorhanden. Die diesbezüglichen Kurbellager können zum Zwecke einer leichten Montage geteilt sein. Der Kurbelwellenantrieb 6 ist mittig in Hebelarmen 16 gelagert, die eine Art Doppelschwinge ausbilden. Diese ist ihrerseits mit deren rechter Seite vermittels des Lagerbocks 18 auf der Traverse 4 gelagert. An der linken Seite dieser Doppelschwinge greift der Stanzantrieb 64 an. Der Stanzantrieb 64 besteht beispielsweise aus einem Hydraulikzylinder und einer zugeordneten Hydraulikanlage, die über den Hydraulikzylinder einen schlagartigen Stanzhub erzeugt, welcher über die Doppelschwinge 16, den Kurbelwellenantrieb 6, die Pleuelstange 58, die Lager 46 auf den unteren Werkzeugtisch 32 und damit auf das untere Werkzeug 34 übertragen wird.

Der Antrieb des Kurbelwellenantriebs 6 kann - wie bereits vorstehend erwähnt - als Hubantrieb einen Servomotor 8 aufweisen, der über Getriebe, Zahnriemen, Zahnkettentriebe oder dergleichen in spielarmer Ausführung auf den Kurbelwellenantrieb 6 einwirkt. Das Schließen und das Öffnen des zweiteiligen Formwerkzeuges 20 entspricht dann je 160° Umdrehung an der Kurbelwelle.

Die bereits in Fig. 1 und 2 dargestellten Schwenkhebel 38 zur verschwenkbaren Aufnahme des unteren Werkzeugtisches 32 weisen in der hier dargestellten Variante beispielsweise die näher in Fig. 3 dargestellten, als Kurvenrollen ausgebildeten, Schwenkhebelseitenführungen 66 auf. Die beispielsweise als Kurvenrollen ausgebildeten seitlichen Führungen 66 der Schwenkhebel 38 laufen auf nicht näher dargestellten gehärteten Schienen und sind spielfrei einstellbar zur exakten Führung des unteren Werkzeugs 34.

Als Antrieb zum Verschwenken der schwenkbaren Führungsschienen 38 der verschwenkbaren Führungs-Schienenanordnung 40 ist beidseitig des unteren Werkzeugtisches 32 eine Kurbelstange 68 vorgesehen. Als Antrieb 70 zur Erzeugung der Schwenkbewegung des unteren Werkzeuges 34 über die schwenkbaren Führungsschienen 38 kann ein auf beide Führungsschienen 38 einwirkender Kurbelstangenschwenkantrieb 68 vorgesehen sein, der beispielsweise durch einen Servo-Getriebemotor 72 und eine Gleichlaufwelle 74 angetrieben wird. Diese Details sind in Fig. 4, die einen Schnitt längs der Linie X-X von Fig. 3 zeigt, näher dargestellt.

Zur Begrenzung der Schwenkbewegung in den Rahmen bzw. das Gestell 2 hinein ist ein Schwenkhebelanschlag 76 vorgesehen, wie in Fig. 3 dargestellt. Dieser Anschlag 76 für den Schwenkhebel 38 ist zur exakten Positionierung des unteren Werkzeuges 32 einstellbar.

Der Antrieb 84 zur Einstellung des oberen Werkzeugtisches 28, der beispielsweise als Feinantrieb ausgebildet sein kann, dient nicht nur beispielsweise zur Einstellung des Stanzhubes, sondern kann auch zur Einschaltung oder Ausschaltung des Stanzhubes herangezogen werden. Zwei in Fig. 1 und 2 nur knapp erkennbare Gewindespindeln 78 werden beispielsweise über Schneckengetriebe 80 über eine Gleichlaufwelle 82 vermittels eines Getriebemotores 84 angetrieben.

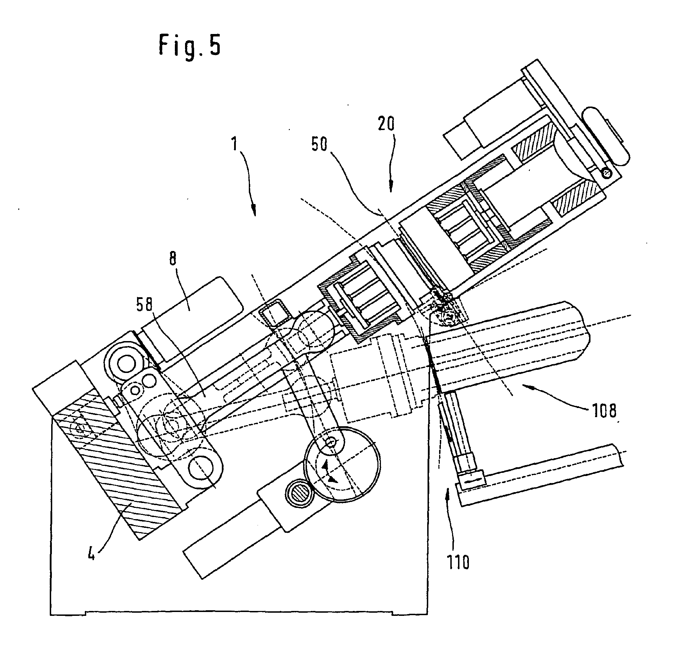

In der hier dargestellten Variante gemäß Fig.1 bis 5 können zwei beispielsweise als pneumatische Balg-Zylinder ausgebildete Gewindespielausgleiche 54 über nicht näher dargestellte Zugstangen den oberen Werkzeugtisch 28 nach oben ziehen, um das Flankenspiel zwischen Spindel und Mutter aufzuheben.

Wie in Fig. 2 näher dargestellt, ist eine Vorstreckereinheit 86 vorgesehen. Die Vorstreckereinheit 86 weist unter anderem in der hier dargestellten Variante einen als Servomotor ausgebildeten Vorstreckerantrieb 88 auf, der über einen in Fig. 2 nicht näher dargestellten Zahnriernentrieb und Planetenrollen-Gewindetrieb, dessen Mutter durch lösbare Kupplungen mit der Vorstreckerplatte 90 und den daran angeordneten Vorstreckern 92 verbunden ist, auf. Dabei kann der Vorstreckerantrieb auch einen hochdynamischen Servomotor 88 aufweisen.

In der in Fig.1 näher dargestellten alternativen Variante des Vorstreckerantriebs der Vorstreckereinheit 86 kann diese eine Konsole 94 aufweisen, die als Vorstreckerantrieb einen hydraulischen Zylinder 96 trägt. Der hydraulische Zylinder 96 wird mit der Konsole 94 relativ zum oberen Werkzeugtisch 28 ruhend mit diesem linear verschoben. Der Abstand zwischen dem hydraulischen Zylinder 96 zum oberen Werkzeugtisch 28 bleibt damit immer konstant. Der Hydraulikzylinder 96 ist durch ein Gehäuse 98 gekapselt, so daß selbst bei geringfügigen Leckagen kein Hydrauliköl austreten kann. Eine Schubstange 100 ist am Hydraulikzylinder 96 angelenkt, wie in Fig. 1 dargestellt, und ist mit ihrem, dem Hydraulikzylinder 96 abgewandten Ende am in der hier dargestellten Variante rechten Ende eines Kipphebels 102 angelenkt. Der Kipphebel 102 ist vermittels einer Lagerung 104 schwenkbar gehalten. Die Lagerung 104 greift dabei über einen geeigneten Lagerbock wiederum am oberen Werkzeugtisch 28 an. Am linken Ende des Kipphebels 102 ist die Vorstreckerstange 106 angelenkt, die mit der Vorstreckerplatte 90 und den daran angeordneten Vorstreckern 92 in Verbindung steht. Der hydraulische Zylinder 96 für den Antrieb der Vorstrecker 92 kann eine Servosteuerung aufweisen, die eine programmierbare Steuerung für den Hub des Zylinders 96 enthält.. Das erforderliche Hydraulikaggregat kann im Maschinenfuß angeordnet werden. Die Vorstreckerstange 106 kann über eine Ausgleichkupplung mit der Vorstreckerplatte 90 im oberen Werkzeug 30 verbunden sein. Das Gehäuse 98 für den Hydraulikzylinder 96 dient nicht nur zum Auffangen eventueller Leckagen, sondern kann ebenso die Servosteuerung tragen und zudem Sensoren - oder dergleichen enthalten, um eventuell auftretende Leckagen zu melden und über Mittel verfügen, um diese abzuleiten. Entsprechendes gilt auch für die Hydraulikleitungen.

Wie in Fig. 2 dargestellt, kann der erfindungsgemäßen Thermoformanlage I eine Stapeleinrichtung 108 zugeordnet sein, welche die fertig hergestellten Formkörper nach dem Auswerfen aus den Kavitäten des unteren Werkzeuges 34 entgegennimmt, stapelt und wegführt. Die Stapeleinrichtung 108 kann hierzu beispielsweise einen Rechen 110 zum Abtransport der ausgeworfenen Formkörper aufweisen.

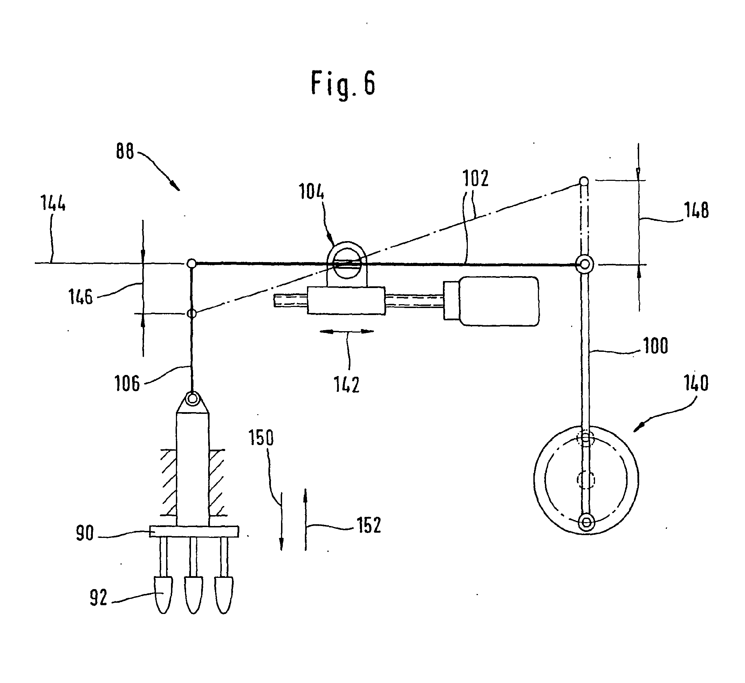

Die in vorstehender Diskussion der Fig. 1 bis 5 verwendeten Bezugszeichen werden in der nachfolgenden Diskussion der Fig. 6 bis 11 für gleiche Elemente bzw. gleich- oder ähnlich wirkende Bauteile analog verwendet, um die Beschreibung zu vereinfachen.

In Fig. 6 ist eine weitere Variante der bereits in Fig. 1 bis 5 diskutierten Vorstreckerantriebe 88 gezeigt. Ein Kurbeltrieb 140 wirkt über eine Schub-Zugstange 100 auf einen Kipphebel 102, der hier in Fig. 6 vereinfacht strichpunktiert dargestellt ist, zur Verdeutlichung zweiter unterschiedlicher Stellungen, nämlich der einen Stellung bei der Ausführung des Arbeitshubes und damit dem Absenken der Vorstrecker 92 als auch beim Rückhub, d.h. beim Anheben der von der Vorstreckerplatte 90 angeordneten Vorstrecker 92. Dabei wirkt der Kipphebel 102, der um einen Drehpunkt in der Lagerung 104 kippt, die in der hier dargestellten Variante querverschieblich ausgebildet ist, wie dies der Pfeil 142 andeutet, auf die Vorstreckerstange 106, welche an der Vorstrekkerplatte 90 angelenkt ist. Durch die Verschiebung 142 des Lagerdrehpunktes 104 quer zu einer gedachten horizontalen Linie 144 kann in vorteilhafter Weise der Hub 146 variiert werden und demgegenüber der Hub 148 des Vorstreckerantriebs konstant gehalten werden. Hierbei sind der abwärts gerichtete Arbeitshub, der Vorstrecker 92 mit dem weiteren Pfeil 150 und der diesbezügliche Rückhub mit dem Pfeil 152 gekennzeichnet.

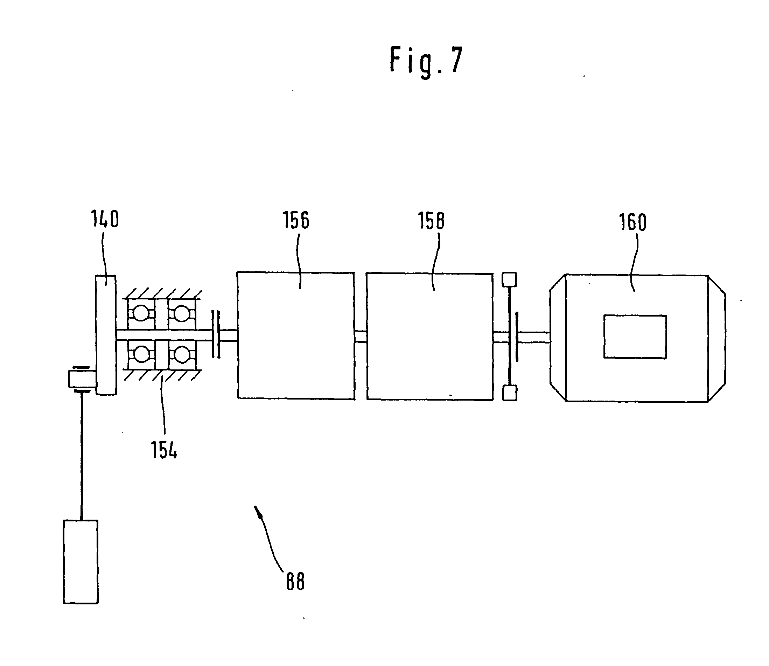

In Fig. 7 ist wiederum in schematisch vereinfachter Weise in einer Skizze eine mögliche Ausführungsform eines Vorstreckerantriebs 88 antriebsseitig näher dargestellt. Der Kurbeltrieb 140 ist vermittels eines Lagers 154 gehäuseseitig abgestützt. Ein Getriebe 156 und eine Kupplungs-Bremskombination 158 verbinden den Kurbeltrieb 140 mit einem Motor 160.

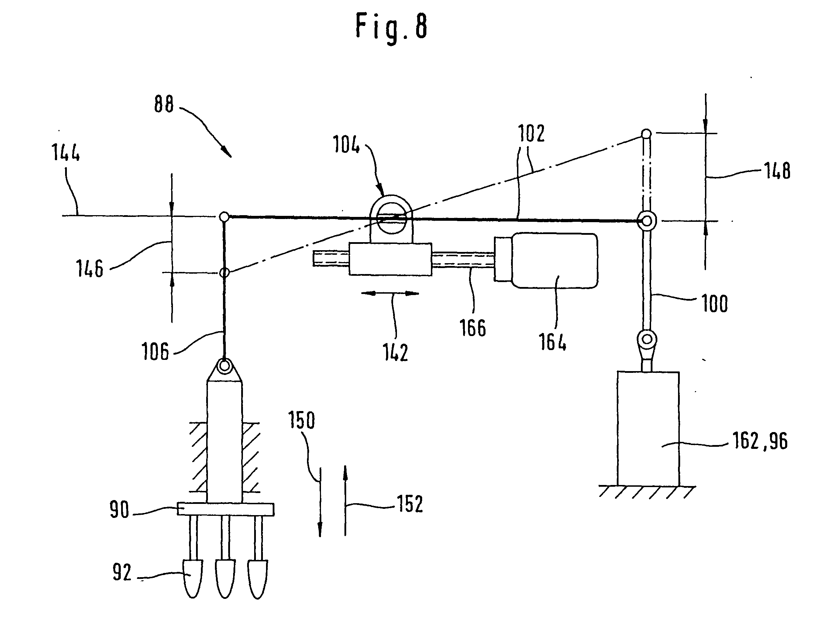

In Fig. 8 ist eine weitere alternative Ausführungsform eines Vorstreckerantriebs 88 in schematisch vereinfachter Skizze dargestellt. Der getriebetechnische Aufbau gleicht im wesentlichen dem in Fig. 6 diskutierten. Statt des in Fig. 6 gezeigten Kurbeltriebs 140 ist in Fig. 8 ein Hydraulikzylinder 162 vorgesehen, wie dies beispielsweise auch bei dem in Fig.1 bis 5 diskutierten Hydraulikvorstreckzylinder 96 der Fall ist. Die Drehpunktverschiebung ist wieder mit dem Pfeil 142 symbolisiert. Zur Verschiebung des Drehpunktes 104 ist in dieser Skizze gemäß Fig. 8 ein Elektromotor 164 und eine Stellspindel 166 vorgesehen.

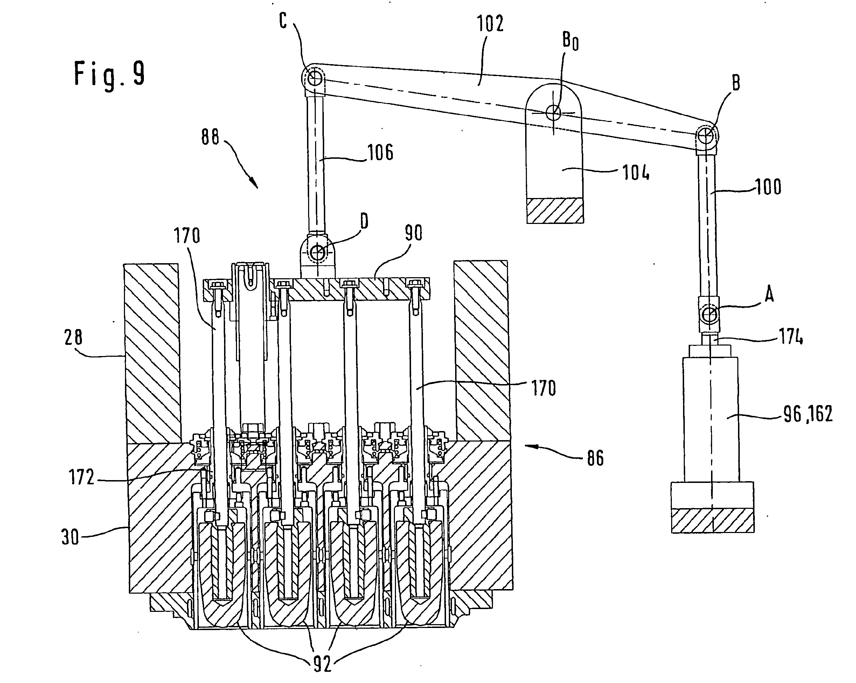

In Fig. 9 ist eine weitere Variante eines Vorstreckerantriebs 88 in schematischer Weise gezeigt. Zur Krafterzeugung dient weder ein hydraulischer Vorstreckzylinder 96 bzw. 162. Dieser ist im Punkt A mit der Schub-Zugstange 100 verbunden. Die Schub-Zugstange 100 ist ihrerseits im Punkt B am Kipphebel 102 angelenkt. Der Kipphebel 102 ist seinerseits in Punkt C an der Vorstreckerstange 106 angelenkt. Die Vorstreckerstange 106 ihrerseits steht im Punkt D mit der Vorstreckerplatte 90 gelenkig in Verbindung. An der Vorstreckerplatte 90 sind die Vorstrecker 92 angelenkt, welche ihrerseits im oberen Werkzeug 30 linear verschieblich gelagert sind. Das obere Werkzeug 30 ist am oberen Werkzeugtisch 28 befestigt. Der Kipphebel 102 ist drehbeweglich um den Punkt B0 im Lager 104 gelagert.

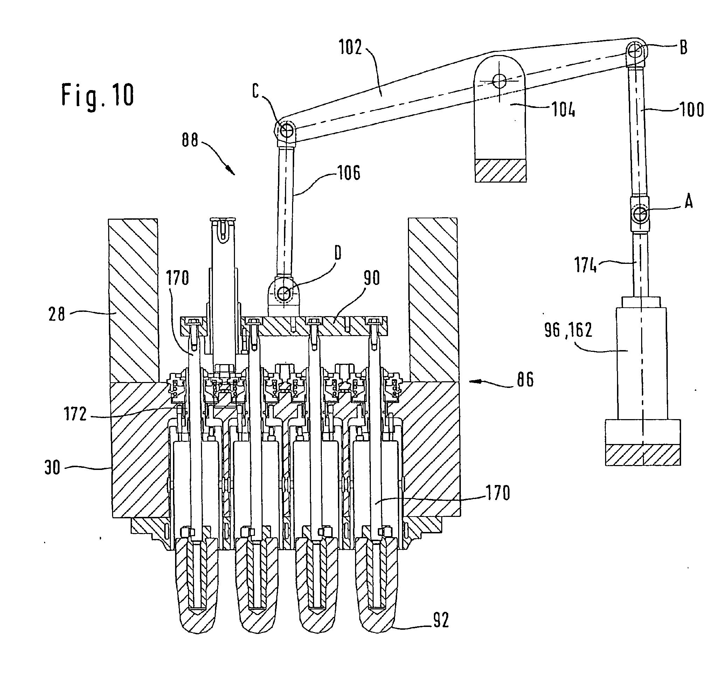

Bei dem in Fig. 9 gezeigten Vorstreckerantrieb 88 ist der Hydraulikzylinder 96 bzw. 162 vor bzw. hinter dem oberen Werkzeug 30 angeordnet. Eine alternative Anordnung des Zylinders 96 bzw. 162 neben dem Werkzeug 30 ist ebenso möglich. Die Vorstrecker 92 sind in Fig. 9 in der Parkposition gezeigt. Dementsprechend sind die Vorstrecker 92 in der schematischen Skizze gemäß Fig.10 in der ausgefahrenen Position gezeigt. Im übrigen gleicht die Darstellung gemäß Fig.10 der in Fig. 9 gezeigten Variante einer beispielhaften Ausführungsform eines Vorstreckerantriebes 88.

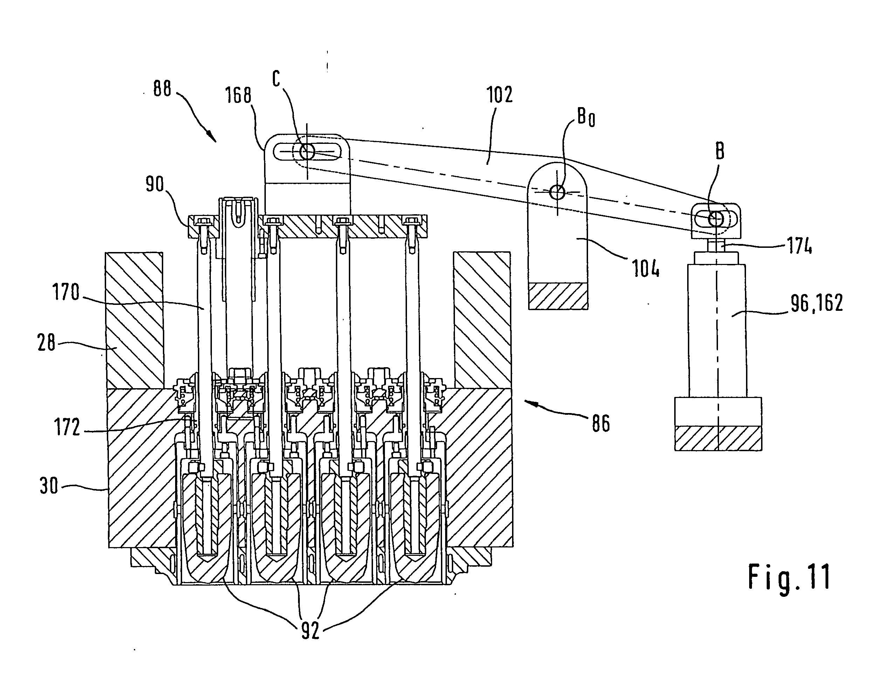

In Fig. 11. ist eine weitere alternative Ausführungsform eines Vorstreckerantriebes 88 gezeigt. Diese ähnelt der in Fig. 9 und 10 gezeigten Variante, weist allerdings eine alternative Hebelmechanik auf. Dabei sind in den Anlenkpunkten B und C Längslöcher vorgesehen, die eine axiale Verschieblichkeit dieser Anlenkpunkte zulassen, so daß der Hydraulikzylinder 96 bzw.162 direkt am Kipphebel 102 im Punkt B angelenkt werden kann, so daß auf die Schub-Zugstange 100 verzichtet werden kann. Ebenso kann auf die Vorstreckerstange 106 verzichtet werden, in dem die vormaligen Anlenkpunkte C und D im gemeinsamen Anlenkpunkt C zusammenfallen, bei dem der Kipphebel 102 direkt mit einer entsprechend ausgestalteten Schulter oder Lagerung 168 mit der Vorstreckerplatte 90 verbunden ist.

Wie vorstehend bereits diskutiert wird zum Formen der beispielsweise becherförmigen Formkörper die erwärmte Kunststoffolie 50 mit Hilfe der im oberen Werkzeug 30 geradlinig verschieblich gelagerten Vorstrecker 92 in die Formnester bzw. Kavitäten des unteren Werkzeuges 34 gedrückt. Durch Erzeugung beispielsweise eines Überdrucks im oberen Werkzeug 30 legt sich die Folie an die Wandungen der Formnester bzw. Kavitäten an. Die Vorstrecker 92 werden dabei wieder in ihre Parkstellung (vgl. Fig. 9) im oberen Werkzeug 30 zurückbewegt (vgl. Pfeile 150 bzw.152 in Fig. 6 und 8).

Um möglichst kurze Zeiten für das Formen der Formkörper zu erreichen, ist ein Vorstreckerantrieb 88 mit hoher Dynamik vorgeschlagen. Für einen Bewegungszyklus der Vorstrecker 92 (Abwärtsbewegung 150 und Rückbewegung 153 in die Ausgangsposition) wird eine Dauer von höchstens 300 ms, vorzugsweise höchstens 250 ms und besonders bevorzugt höchstens 200 ms erzielt. Zudem ist der in Fig. 6 bis 11 diskutierte Vorstreckerantrieb 88 in der Lage, die zum Vorstrecken der Kunststoffolie 50 erforderlichen Kräfte zu erzeugen. Die Summe der auf die einzelnen Vorstrecker 92 wirkenden Kräfte kann je nach Ausführungsform bis zu 50.000 N betragen.

Dementsprechend ist die vorstehend diskutierte Ausführungsform eines Vorstreckerantriebes 88 mit einem hydraulischen Zylinder 96 bzw. 162 zur Erzeugung der notwendigen Kräfte vorgesehen. Die Vorstrecker 92 sind in den Darstellungen gemäß Fig. 9 bis 11 vermittels einer Vorstrecker-Stempelstange 170 mit einer Brücke bzw. der sog. Vorstreckerplatte 90 fest verbunden. Die Stempelstangen 190 laufen geradlinig geführt in Führungsbuchsen 172 des oberen Werkzeugs 30, so daß die gesamte Vorstreckereinheit 86 vertikal bewegt werden kann.

Der Antrieb der Vorstrecker 92 erfolgt wie vorstehend diskutiert mit Hilfe des Hydraulikzylinders 96 bzw. 162 ist - wie in Fig. 1 bis 5 dargestellt - fest mit einer Konsole 94 verbunden, die ihrerseits vom oberen Werkzeugtisch 28 getragen ist. Die Linearbewegung der Kolbenstange 174 wird durch die Koppel- bzw. Schub-Zugstange 100 mit den Drehgelenken A und B zunächst auf den Kipphebel 102 übertragen. Der Kipphebel 102 ist - wie vorstehend diskutiert - im Punkt B₀ drehbar gegenüber dem oberen Werkzeugtisch 28 abgestützt. Die Koppel- bzw. Vorstreckerstange 106 mit den Drehgelenken C und D überträgt schließlich die Bewegung des Kipphebels 102 auf die Vorstreckereinheit 86.

Das in Fig. 6 bis 11 schematisch dargestellte Getriebe 88 kann in vielfältiger Form variiert werden. Bei einer beispielhaften Variante kann die Bewegung des Kipphebels 102 durch eine Bolzen und eine Kulisse auf die Vorstreckereinheit 86 übertragen werden. Ebenso kann der Zylinder 96 bzw. 162 alternativ zur festen Verbindung mit der Konsole 94 gegenüber der Konsole 94 lediglich angelenkt und damit verschwenkbar gehalten sein.

Ein weiterer Vorteil des hydraulischen Vorstreckerantriebs 88 sind die damit erzeugbaren hohen Kräfte bei einer sehr guten Dynamik. Die Gefahr einer thermischen Überlastung besteht hierbei nicht.

Die vorliegende Erfindung schafft damit erstmals in vorteilhafter Weise eine Thermoformanlage zur Herstellung von Formkörpern aus Kunststoffolie, wie Becher, Behälter, Deckel, Lebensmittelumverpackungen oder dergleichen, mit einer ein zweiteiliges Formwerkzeug aufweisenden Umformstation. Das zweiteilige Formwerkzeug weist einen einstellbar feststellbaren oberen Werkzeugtisch mit einem oberen Werkzeug mit darin beweglich gelagerten Vorstreckern und einen beweglichen unteren Werkzeugtisch mit einem unteren Werkzeug mit Kavitäten auf. Der bewegliche untere Werkzeugtisch ist vermittels einer Führungseinrichtung geführt und durch eine Antriebseinrichtung relativ zum oberen Werkzeugtisch auf diesen zu und von diesem weg bewegbar. Hierbei weist der obere Werkzeugtisch erfindungsgemäß erstmals eine erste ihm zugeordnete Antriebseinrichtung zum Einrichten des oberen Werkzeugtisches in seiner Lage relativ zum oberen Totpunkt des unteren Werkzeugtisches in Abstimmung mit dem jeweils herzustellenden Formkörper auf. Weiterhin weist der obere Werkzeugtisch erstmals eine zweite ihm zugeordnete Antriebseinrichtung zum Antreiben der im oberen Werkzeug beweglich gelagerten Vorstrecker auf. Ferner schlägt die vorliegende Erfindung erstmals eine wirtschaftliches Verfahren zur Herstellung der Formkörper aus Kunststoffolie vor.

Sofern ein hydraulischer Antrieb für die Vorstrecker vorgesehen ist, kann dieser in vorteilhafter Weise als sog. Linearverstärker Servosteuerung vorgesehen werden, so daß sowohl dessen Hub als auch Geschwindigkeitsprofil unabhängig voneinander gesteuert und damit vorgegeben werden können.

Mit der erfindungsgemäßen Thermoformanlage können Kunststoffolien aus PP, PS, PE, PET, ABS oder PVC verarbeitet werden. Die der Thermoformanlage als Folienbahn zugeführte Kunststoffolie kann dabei eine Folienbahnbreite von wenigstens 250 mm bis 750 mm bei einer Folienbahndicke von wenigstens 0,3 mm bis 4 mm aufweisen. Die zwischen dem oberen und dem unteren Werkzeug verfügbare Formfläche beträgt wenigstens 700 mm x 450 mm. Die maximale Schließkraft beträgt wenigstens 400 kN bei einer maximalen Schnittlänge von wenigstens 8400 mm.

### Bezugszeichenliste

- 1: Thermoformanlage
- 2: Gestell bzw. Rahmen
- 4: untere Traverse
- 6: Kurbelwellenantrieb
- 8: elektrischer Servomotor
- 10: Riemen
- 12: Riemenscheibe
- 14: Riemenscheibe
- 16: Hebelarm
- 18: Lagerbock
- 20: zweiteiliges Formwerkzeug
- 22:
- 24: obere Traverse
- 26: Antriebeinstellung oberes Werkzeug
- 28: oberer Werkzeugtisch
- 30: oberes Werkzeug
- 32: unterer Werkzeugtisch
- 34: unteres Werkzeug
- 36: Linearführung unterer Werkzeugtisch
- 38: schwenkbare Führungsschienen
- 40: Führungs-Schienenanordnung
- 42: Führungseinrichtung
- 44: Auswerferantrieb
- 46: Pleuelstangenlager
- 48: Kettentransport
- 50: Kunststoffolie
- 52: Linearführung oberer Werkzeugtisch
- 54: Gewinde-Spielausgleich
- 56: Auswerfer
- 58: Pleuelstange
- 60: erster Pleuelstangenabschnitt
- 62: Exzenterwellenabschnitt
- 64: Stanzantrieb
- 66: Schwenkhebel-Seitenführung
- 68: Kurbelstangenschwenkantrieb
- 70: Schwenkantrieb
- 72: Servo-Getriebemotor
- 74: Gleichlaufwelle
- 76: Schwenkhebel-Anschlag
- 78: Gewindespindel
- 80: Schneckengetriebe
- 82: Gleichlaufwelle
- 84: Getriebemotor
- 86: Vorstreckereinheit
- 88: Vorstreckerantrieb
- 90: Vorstreckerplatte
- 92: Vorstrecker
- 94: Konsole für Vorstreckerantrieb
- 96: Hydraulischer Vorstreckzylinder
- 98: Gehäuse
- 100: Schubstange
- 102: Kipphebel
- 104: Lagerung Kipphebel
- 106: Vorstreckerstange
- 108: Stapeleinrichtung
- 110: Rechen

- 140: Kurbeltrieb
- 142: Drehpunktverschiebung
- 144: gedachte horizontale Linie
- 146: variabler Hub
- 148: konstanter Hub
- 150: Arbeitshub
- 152: Rückruf
- 154: Lager
- 156: Getriebe
- 158: Kupplungs-Brems-Kombination
- 160: Motor
- 162: hydraulischer Zylinder
- 164: Elektromotor
- 166: Stellspindel
- 168: Schulter bzw. Lager
- 170: Vorstrecker-Stempelstange
- 172: Kulissenführung
- 174: Kolbenstange

## Patentansprüche

1. Thermoformanlage (1) zur Herstellung von Formkörpern aus Kunststoffolie (50), wie Becher, Behälter, Deckel, Lebensmittelumverpackungen oder dergleichen, mit einer ein zweiteiliges Formwerkzeug (20) aufweisenden Umformstation,
wobei das zweiteilige Formwerkzeug (20) einen einstellbar feststellbaren oberen Werkzeugtisch (28) mit einem oberen Werkzeug (30) mit darin beweglich gelagerten Vorstreckern (92) und einen beweglichen unteren Werkzeugtisch (32) mit einem unteren Werkzeug (34) mit Kavitäten aufweist,
wobei der bewegliche untere Werkzeugtisch (32) vermittels einer Führungseinrichtung (42) geführt und durch eine Antriebseinrichtung relativ zum oberen Werkzeugtisch (28) auf diesen zu und von diesem weg bewegbar ist,
wobei der obere Werkzeugtisch (28) eine erste ihm zugeordnete Antriebseinrichtung (26) zum Einrichten des oberen Werkzeugtisches (28) in seiner Lage relativ zum oberen Totpunkt des unteren Werkzeugtisches (32) in Abstimmung mit dem jeweils herzustellenden Formkörper aufweist, und
wobei der obere Werkzeugtisch (28) eine zweite ihm zugeordnete Antriebseinrichtung (88) zum Antreiben der im oberen Werkzeug beweglich gelagerten Vorstrecker (92) aufweist,
**dadurch gekennzeichnet, daß**
die zweite Antriebseinrichtung (88) über eine Schub-Zugstange (100), einen Kipphebel (102) und eine Druckstange (106) auf den Vorstrecker (92) im oberen Werkzeug (30), vorzugsweise vermittels eines verschieblich (142) ausgestalteten Drehpunktes B₀ des Kipphebels (104), einwirkt.

2. Thermoformanlage (1) nach Anspruch 1, **dadurch gekennzeichnet, daß** die erste Antriebseinrichtung (26) zum Einrichten des oberen Werkzeugtisches ein elektrischer Servomotor (84) ist.

3. Thermoformanlage (1) nach Anspruch 1 oder 2, **dadurch gekennzeichnet, daß** die erste Antriebseinrichtung (26) über eine Synchronisationswelle (82) mit darauf angeordneten Schnecken/Rädern mit zwei Stellspindeln (78) zusammenwirkt, die ihrerseits derart auf den oberen Werkzeugtisch (28) einwirken, daß dieser in seiner horizontalen Ausrichtung vertikal auf und ab bewegbar ist, so daß der obere Werkzeugtisch (28) auf den jeweils herzustellenden Formkörper einstellbar ist.

4. Thermoformanlage (1) nach einem der Ansprüche 1 bis 3, **dadurch gekennzeichnet, daß** die zweite Antriebseinrichtung (88) des oberen Werkzeugtisches (28) zum Antreiben der Vorstrecker (92) einen hydraulischen Antrieb (96, 162) oder einen vermittels eines elektrischen Servomotors (160) angetriebenen Kurbelantrieb (140) aufweist.

5. Thermoformanlage (1) nach einem der Ansprüche 1 bis 4, **dadurch gekennzeichnet, daß** der Vorstrecker (92) vermittels der zweiten Antriebseinrichtung (88) derart antreibbar ist, daß ein Hub (146) von wenigstens 120 mm in weniger als 300 msec, vorzugsweise weniger als 200 msec., ausführbar ist.

6. Verfahren zur Herstellung von Formkörpern aus Kunststofffolie, wie Becher, Behälter, Deckel, Lebensmittelumverpackungen oder dergleichen, mittels einer Thermoformanlage (1), mit folgenden Schritten:
- Bereitstellen einer Thermoformanlage (1) gemäß dem Oberbegriff von Anspruch 1;
- Zuführen von Kunststofffolie (50) in das zweiteilige Formwerkzeug (20) vermittels eines Kettentransports (48);
- Spannen der Kunststofffolie (50) im Bereich des Formwerkzeugs (20);
- Schließen des Formwerkzeugs (20) durch Führung des beweglichen unteren Werkzeugtisches (32) vermittels der Führungseinrichtung (42) sowie Antreiben desselben vermittels der Antriebseinrichtung derart, daß dieser relativ zum oberen Werkzeugtisch (28) auf diesen zu bewegt wird,
- Herstellen der Formkörper bei geschlossenem Formwerkzeug (20),
- Öffnen des Formwerkzeugs (20) durch Führung des beweglichen unteren Werkzeugtisches (32) vermittels der Führungseinrichtung (42) sowie Antreiben desselben vermittels der Antriebseinrichtung derart, daß dieser relativ zum oberen Werkzeugtisch (28) von diesem weg bewegt wird,
- Auswerfen der Formkörper ggf. in eine Stapeleinrichtung,
- der obere Werkzeugtisch (28) vermittels einer ersten ihm zugeordneten Antriebseinrichtung (26) in seiner Lage relativ zum oberen Totpunkt des unteren Werkzeugtisches (32) in Abstimmung mit dem jeweils herzustellenden Formkörper eingerichtet wird, und
- daß die im oberen Werkzeug (30) beweglich gelagerten Vorstrecker (92) vermittels einer zweiten Antriebseinrichtung (88) angetrieben werden,
**dadurch gekennzeichnet, daß**
- die zweite Antriebseinrichtung (88) über eine Schub-Zugstange (100), einen Kipphebel (102) und eine Druckstange (106) auf den Vorstrecker (92) im oberen Werkzeug (30), vorzugsweise vermittels eines verschieblich (142) ausgestalteten Drehpunktes B₀ des Kipphebels (104), einwirkt.

7. Verfahren nach Anspruch 6, **dadurch gekennzeichnet, daß** der Vorstrecker (92) vermittels der zweiten Antriebseinrichtung (88) derart angetrieben wird, daß ein Hub (146) von wenigstens 120 mm in weniger als 300 msec, vorzugsweise weniger als 200 msec., ausgeführt wird.

## Claims

1. A thermoforming apparatus (1) for producing shaped bodies of plastic sheet (50), such as cups, containers, lids, secondary packagings for foodstuffs or the like, comprising a forming station with a two-part forming tool (20),
wherein said two-part forming tool (20) comprises an upper tool table (28) adapted to be adjustably fixed and having an upper tool (30) with pre-stretch means (92) movably mounted therein, and a movable lower tool table (32) having a lower tool (34) with cavities,
wherein said movable lower tool table (32) is guided through the intermediary of guide means (42) and capable of being approached to said upper tool table (28) and moved away from it by drive means, and
wherein said upper tool table (28) includes associated first drive means (26) for adjusting said upper tool table (28) in its position relative to the upper dead center of said lower tool table (32) in correspondence with the respective shaped body to be produced, and
said upper tool table (28) includes associated second drive means (88) for driving said stretch means (92) movably mounted in said upper tool,
**characterized in that**
said second drive means (88) act on said pre-stretch means (92) in said upper tool (30) via a thrust/draw rod (100), a rocking lever (102), and a forcing lever (106), preferably through the intermediary of a shiftably (142) designed fulcrum B₀ of said rocking lever (104).

2. The thermoforming apparatus (1) in accordance with Claim 1, wherein said first drive means (26) for adjusting said upper tool table (84) have the form of an electrical servomotor.

3. The thermoforming apparatus (1) in accordance with Claim 1 or 2, wherein said first drive means (26) cooperate via a synchronization shaft (82) with worm gears/gears arranged thereon with two actuating spindles (78) which, in turn, act on said upper tool table (28) such that the latter may be moved up and down in its horizontal orientation, so that said upper tool table (28) may be adjusted to the respective shaped body to be produced.

4. The thermoforming apparatus in accordance with any one of Claims 1 to 3, wherein said second drive means (88) of said upper tool table (28) include a hydraulic drive mechanism (96, 162) or a crank drive (140) driven through the intermediary of an electrical servomotor (160) for driving said pre-stretch means (92).

5. The thermoforming apparatus in accordance with any one of Claims 1 to 4, wherein said pre-stretch means (92) may be driven through the intermediary of said second drive means (88) such that a stroke (146) of at least 120 mm may be performed in less than 300 ms, preferably less than 200 ms.

6. Method for producing shaped bodies of plastic sheet, such as cups, containers, lids, secondary packagings for foodstuffs or the like, with the aid of a thermoforming apparatus (1), comprising the following steps:
- providing a thermoforming apparatus (1) according to the preamble of claim 1;
- supplying a plastic sheet (50) into the two-part forming tool (20) by means of chain transport means (48);
- tensioning the plastic sheet (50) in the range of the forming tool (20);
- closing said forming tool (20) by guiding said movable lower tool table (32) through the intermediary of said guide means (42) and driving it through the intermediary of said drive means such that it is approached towards said upper tool table (28),
- producing the shaped bodies in the closed condition of said forming tool (20),
- opening said forming tool (20) by guiding said movable lower tool table (32) through the intermediary of said guide means (42) and driving it through the intermediary of said drive means such that it is moved away from said upper tool table (28),
- ejecting the shaped bodies, optionally into a stacking means,
- wherein said upper tool table (28) is adjusted through the intermediary of associated first drive means (26) in its position relative to the upper dead center of said lower tool table (32) in correspondence with the respective shaped body to be produced, and
- wherein said pre-stretch means (92) movably mounted in said upper tool (30) may be driven through the intermediary of second drive means (88),
**characterized in that**
- said second drive means (88) act on said pre-stretch means (92) in said upper tool (30) via a thrust/draw rod (100), a rocking lever (102), and a forcing lever (106), preferably through the intermediary of a shiftably (142) designed fulcrum B₀ of said rocking lever (104).

7. The method in accordance with Claim 6, wherein said pre-stretch means (92) may be driven through the intermediary of said second drive means (88) such that a stroke (146) of at least 120 mm may be performed in less than 300 ms, preferably less than 200 ms.

## Revendications

1. Installation de thermoformage (1) pour produire des corps moulés en film de matière plastique (50) tels que des pots, des récipients, des couvercles, des emballages de produits alimentaires ou similaires, avec un poste de formage présentant un outil de formage (20) en deux parties (20),
sachant que l'outil de formage en deux parties (20) présente un plateau porte-outil (28) supérieur pouvant être fixé de manière réglable avec un outil supérieur (30) contenant des préétireuses mobiles (92), et un plateau porte-outil (32) inférieur mobile avec un outil inférieur (34) contenant des cavités,
sachant que le plateau porte-outil (32) inférieur mobile est guidé à l'aide d'un dispositif de guidage (42) et peut être déplacé par un dispositif d'entraînement par rapport au plateau porte-outil (28) supérieur vers et loin de celui-ci,
sachant que le plateau porte-outil supérieur (28) présente un premier dispositif d'entraînement (26) qui lui est associé pour installer le plateau porte-outil (28) dans sa position par rapport au point mort supérieur du plateau porte-outil inférieur (32) de manière adaptée au corps moulé à fabriquer respectivement, et
sachant que le plateau porte-outil supérieur (28) présente un second dispositif d'entraînement (88) qui lui est associé pour entraîner les préétireuses (92) logées de manière mobile dans l'outil supérieur,
**caractérisée en ce que**
le second dispositif d'entraînement (88) agit par une tige de traction-poussée (100), un levier de basculement (102) et une tige de compression (106) sur la préétireuse (92) dans l'outil supérieur (30), de préférence à l'aide d'un pivot B₀ configuré de manière mobile (142) du levier de basculement (104).

2. Installation de thermoformage (1) selon la revendication 1, **caractérisée en ce que** le premier dispositif d'entraînement (26) pour installer le plateau porte-outil supérieur est un servomoteur électrique (84).

3. Installation de thermoformage (1) selon la revendication 1 ou 2, **caractérisée en ce que** le premier dispositif d'entraînement (26) coagit par un arbre de synchronisation (82) présentant des vis/roues avec deux broches de réglage (78) qui agissent de leur côté sur le plateau porte-outil (28) supérieur de telle manière que celui-ci puisse être déplacé verticalement en haut et en bas dans son orientation horizontale de sorte que le plateau porte-outil (28) supérieur puisse être réglé sur le corps moulé à fabriquer respectivement.

4. Installation de thermoformage (1) selon l'une quelconque des revendications 1 à 3, **caractérisée en ce que** le second dispositif d'entraînement (88) du plateau porte-outil supérieur (28) pour l'entraînement des préétireuses (92) présente un entraînement hydraulique (96, 162) ou un mécanisme à bielle et manivelle (140) entraîné par un servomoteur électrique (160).

5. Installation de thermoformage (1) selon l'une quelconque des revendications 1 à 4, **caractérisée en ce que** la préétireuse (92) peut être entraînée à l'aide du second dispositif d'entraînement (88) de telle manière qu'une course (146) d'au moins 120 mm puisse être réalisée en moins de 300 ms, de préférence en moins de 200 ms.

6. Procédé pour produire des corps moulés en film de matière plastique tels que des pots, des récipients, des couvercles, des emballages de produits alimentaires ou similaires à l'aide d'une installation de thermoformage (1), comprenant les étapes suivantes :
- mise à disposition d'une installation de thermoformage (1) selon le préambule de la revendication 1 ;
- amenée du film en matière plastique (50) dans l'outil de formage en deux parties (20) à l'aide d'un transport par chaîne (48) ;
- tension du film en matière plastique (50) dans la zone de l'outil de formage (20) ;
- fermeture de l'outil de formage (20) par le guidage du plateau porte-outil (32) inférieur mobile à l'aide du dispositif de guidage (42) ainsi qu'entraînement de celui-ci à l'aide du dispositif d'entraînement de telle manière que celui-ci soit déplacé par rapport au plateau porte-outil supérieur (28) vers celui-ci,
- fabrication des corps moulés lorsque l'outil de formage (20) est fermé,
- ouverture de l'outil de moulage (20) par le guidage du plateau porte-outil (32) inférieur mobile à l'aide du dispositif de guidage (42) ainsi qu'entraînement de celui-ci à l'aide du dispositif d'entraînement de telle manière que celui-ci soit déplacé par rapport au plateau porte-outil supérieur (28) loin de celui-ci,
- éjection des corps moulés éventuellement dans une empileuse,
- le plateau porte-outil supérieur (28) est installé à l'aide d'un premier dispositif d'entraînement (26) qui lui est associé dans sa position par rapport au point mort supérieur du plateau porte-outil inférieur (32) de manière adaptée au corps moulé à fabriquer respectivement, et
- les préétireuses (92) logées de manière mobile dans l'outil supérieur (30) sont entraînées à l'aide d'un second dispositif d'entraînement (88), **caractérisé en ce que**
- le second dispositif d'entraînement (88) agit par une tige de poussée-traction (100), un levier de basculement (102) et une tige de compression (106) sur la préétireuse (92) dans l'outil supérieur (30), de préférence à l'aide d'un pivot B₀ configuré de manière mobile (142) du levier de basculement (104).

7. Procédé selon la revendication 6, **caractérisé en ce que** la préétireuse (92) est entraînée à l'aide du second dispositif d'entraînement (88) de telle manière qu'une course (146) d'au moins 120 mm soit réalisée en moins de 300 ms, de préférence en moins de 200 ms.
